# FASCICULE DE BREVET EUROPEEN

(11) **EP 3 189 380 B1**
(45) Date de publication et mention de la délivrance du brevet: **22.08.2018**
(21) Numéro de dépôt: 15767223.9
(22) Date de dépôt: 04.09.2015
(51) Int. Cl.: G05B 9/03, H04L 12/40

(54) **ARCHITECTURE BI-VOIES AVEC LIAISONS CCDL REDONDANTES**
BIDIREKTIONALE ARCHITEKTUR MIT REDUNDANTEN CCDL
TWO-WAY ARCHITECTURE WITH REDUNDANT CCDL'S

(30) Priorité: 05.09.2014 FR 1458350
(43) Date de publication de la demande: 12.07.2017
(73) Titulaire: Safran Electronics & Defense, 92100 Boulogne-Billancourt (FR); Safran Helicopter Engines, 64510 Bordes (FR)
(72) Inventeur: LIU, Céline, F-92100 Boulogne-Billancourt (FR); MARTI, Nicolas, F-92100 Boulogne-Billancourt (FR); LANGFORD, Stephen, F-64000 Pau (FR)
(74) Mandataire: Regimbeau
(86) Numéro de dépôt international: PCT/FR2015/052342
(87) Numéro de publication internationale: WO 2016/034824

(56) Documents cités:
- US-A1- 2004 088 991
- US-A1- 2004 153 700
- US-A1- 2008 205 416
- US-A1- 2010 222 900

## Description

### DOMAINE TECHNIQUE GENERAL

L'invention a pour objet un système de contrôle de vol d'un aéronef comprenant deux unités de traitement ou calculateurs et constituant une architecture bi-voies.

Ce système s'applique tout particulièrement aux moteurs de dimensions réduites tels que des moteurs d'hélicoptère.

### ETAT DE LA TECHNIQUE

Les systèmes de contrôle de vol embarqués équipant les aéronefs tels que les avions ou les hélicoptères existants exécutent des fonctions de commande et de régulation du moteur de l'aéronef assurant le bon fonctionnement de celui-ci. De telles fonctions sont critiques pour la sécurité des passagers. De tels systèmes doivent donc être résistants aux pannes.

Pour cela, les systèmes de contrôle de vol existants comprennent généralement deux unités de traitement ou calculateurs, chacune capable d'assurer le bon fonctionnement du moteur. Un tel système constitue ainsi une architecture à deux voies dans laquelle chaque voie est capable d'assurer l'exécution desdites fonctions critiques en cas de panne de l'autre voie.

Afin de déterminer si elle doit prendre en charge l'exécution de ces fonctions, chaque unité de traitement doit pouvoir échanger des informations avec l'autre unité de traitement du système de contrôle, notamment des informations concernant l'état de santé de cette autre unité de traitement. Pour ce faire, les deux unités de traitement du système de contrôle sont généralement reliés par une liaison numérique bidirectionnelle, ou deux liaisons unidirectionnelles de sens opposés, telle qu'une liaison CCDL (« Cross Chanel Data Link »).

Afin de renforcer la résistance aux pannes d'un tel système de contrôle de vol, les unités de traitements du système de contrôle peuvent être dissociées dans deux boitiers distants afin d'être éloignées géographiquement l'une de l'autre et de diminuer ainsi la sensibilité aux agressions externes. De plus, afin de rendre le système de contrôle résistant à une panne de la liaison de données entre les unités de traitement, les unités de traitement peuvent être reliées par une liaison supplémentaire sous la forme de plusieurs liens analogiques discrets, pouvant atteindre le nombre de vingt sur des fadecs civils. Néanmoins l'augmentation du nombre de liens augmente la probabilité qu'un de ceux-ci soit défaillant et augmente le volume de câblage, rendant ainsi difficile la mise au point d'un système de contrôle de vol compact. Bien qu'accessoire pour le contrôle de moteurs de grands aéronefs tels que des avions de ligne, une telle compacité devient primordiale pour contenir l'encombrement total dans le cas du moteur d'un petit aéronef, tel qu'un moteur d'hélicoptère.

Le document US 2008/205416 A1 divulgue un système de contrôle de vol d'un aéronef comprenant au moins deux unités de traitement redondantes connectées par trois liaisons CCDL redondantes, où deux de ces liaisons peuvent être actives simultanément et la troisième peut être utilisée comme une liaison de sauvegarde. Il existe donc un besoin d'un système de contrôle présentant une architecture bi-voies minimisant la quantité de câblage tout en étant résistante aux pannes et agressions externes.

### PRESENTATION DE L'INVENTION

La présente invention se rapporte ainsi selon un **premier aspect** à un système de contrôle de vol d'un aéronef comprenant :
- une première unité de traitement,
- une deuxième unité de traitement,
- des moyens de communication configurés pour établir une première liaison numérique bidirectionnelle et une deuxième liaison numérique bidirectionnelle entre la première unité de traitement et la deuxième unité de traitement,
ladite deuxième liaison étant redondante avec la première liaison,
et lesdites première et deuxième liaisons étant susceptibles d'être actives de façon concomitante,
ledit système comprenant en outre des moyens de communication de sauvegarde permettant d'assurer des échanges de données entre les première et deuxième unités de traitement en cas de défaillances des première et deuxième liaisons,
lesdits moyens de communication de sauvegarde comprenant un réseau de capteurs ou d'actionneurs et/ou un réseau sécurisé embarqué pour l'avionique.

Un tel système présente une forte résistance aux pannes grâce à la redondance de ses unités de traitement et de ses moyens de communications ainsi que par la minimisation du nombre de liaisons de communication, tout en réduisant son encombrement. De plus, les moyens de communication de sauvegarde permettent d'éviter un aveuglement total du système bi-voies et une coupure des communications entre les deux unités de traitement. Enfin, l'utilisation de tels réseaux pour échanger des informations entre les unités de traitement permet d'augmenter le niveau de redondance des moyens de communication entre les unités de traitement et d'assurer la sûreté de fonctionnement du système de contrôle de vol sans pour autant nécessiter la mise en place de moyens de communication supplémentaires dédiés uniquement à la communication entre les unités de traitement.

Selon une caractéristique avantageuse et non limitative, les première et deuxième liaisons peuvent être des liaisons CCDL (« Cross Channel Data Link »).

Une telle liaison permet notamment aux unités de traitement d'échanger des informations de santé plus complexes que celles échangées par l'intermédiaire des liaisons analogiques discrètes des systèmes connus tout en limitant le volume de câblage.

Le réseau sécurisé embarqué pour l'avionique peut par exemple être un réseau Ethernet redondant du type AFDX (« Avionics Full DupleX switched ethernet ») ou µAFDX.

Selon une caractéristique avantageuse et non limitative, chaque unité de traitement du système de contrôle selon le premier aspect comprend des moyens pour vérifier l'intégrité de données reçues sur chacune des liaisons.

Ceci permet de s'assurer que les données reçues n'ont pas été corrompues au cours de leur transmission.

Par ailleurs, chaque unité de traitement peut comprendre des moyens pour vérifier, suite à la transmission d'une donnée à la fois sur la première liaison et sur la deuxième liaison, la cohérence des données reçues sur la première liaison et sur la deuxième liaison.

Ceci permet de renforcer la capacité de détection par le système des altérations des données échangées entre les unités de traitement et minimise ainsi la probabilité de défaillance du système de contrôle de vol.

Par ailleurs, les moyens de communication du système de contrôle de vol selon le premier aspect peuvent être configurés pour transmettre d'une première unité de traitement à une seconde unité de traitement des données relatives à la santé de la première unité de traitement, ledit système selon le premier aspect comprenant en outre des moyens pour sélectionner une unité de traitement pour le contrôle d'un moteur dudit aéronef parmi la première et la seconde unités de traitement en fonction des données relatives à la santé de la première unité de traitement transmises et de données relatives à la santé de la seconde unité de traitement.

Un tel échange de données permet à chaque unité de traitement d'avoir connaissance de l'état de santé de l'autre unité de traitement afin de garantir que la voie en meilleur santé assure toujours le contrôle du moteur.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement un système de contrôle de vol selon un mode de réalisation de l'invention;
- la figure 2 illustre schématiquement des moyens matériels destinés à établir deux liaisons CCDL entre deux unités de traitement d'un système de contrôle de vol selon un mode de réalisation de l'invention ;
- la figure 3 illustre schématiquement la ségrégation physique de modules CCDL de chaque unité de traitement d'un système de contrôle de vol selon un mode de réalisation de l'invention;
- la figure 4 illustre schématiquement la ségrégation des moyens matériels d'une unité de traitement destinés à établir deux liaisons CCDL selon un mode de réalisation de l'invention.

### DESCRIPTION DETAILLEE

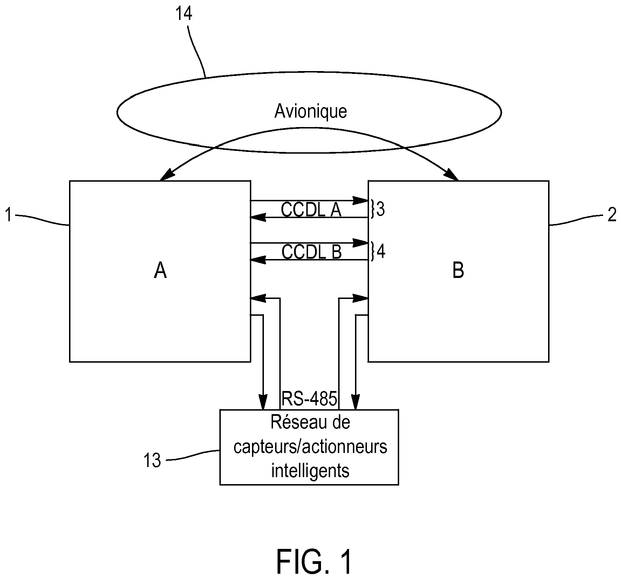

Un mode de réalisation de l'invention, illustré en **figure 1**, concerne un système de contrôle de vol d'un aéronef comprenant au moins une première unité de traitement 1 et une deuxième unité de traitement 2. Ces deux unités de traitement sont redondantes et peuvent chacune exécuter les fonctions de commande et de régulation du moteur de l'aéronef. Le système tel qu'illustré en **figure 1** constitue ainsi une architecture bi-voies comprenant une voie A et une voie B.

Les unités de traitement 1 et 2 peuvent être des processeurs d'un même système informatique multiprocesseur comportant plusieurs processeurs. Afin de renforcer la résistance du système de contrôle de vol aux agressions externes et d'éviter qu'un unique évènement localisé ne puisse mettre hors service les deux unités de traitements 1 et 2, les deux voies peuvent être installées à distance l'une de l'autre dans des boitiers séparés. Dans une telle configuration, les unités de traitement ne sont pas des coeurs d'exécution intégrés au sein d'un unique processeur.

Le système comprend également des moyens de communication permettant de connecter les deux unités de traitement pour permettre l'échange de données essentielles au bon fonctionnement de chacune des unités de traitement telles que des informations sur l'état de santé de l'unité de traitement opposée.

Ce système bi-voies se distingue des systèmes connus en ce que les moyens de communications sont configurés pour établir une première liaison numérique bidirectionnelle 3 et une deuxième liaison numérique bidirectionnelle 4 entre la première unité de traitement 1 et la deuxième unité de traitement 2. Contrairement aux systèmes connus, un tel système ne comporte aucun lien discret entre les deux unités de traitement, ce qui permet de limiter la complexité de son câblage et la probabilité qu'un des liens de communication tombe en panne.

La deuxième liaison 4 est redondante avec la première liaison 3 afin d'assurer la communication entre les deux unités de traitement en cas de défaillance de la première liaison 3. Une telle redondance garantit, du point de vue de l'échange d'informations entre les deux unités de traitement, le même niveau de sûreté que celui présenté par les systèmes connus.

De plus lesdites première et deuxième liaisons sont susceptibles d'être actives de façon concomitante. Ainsi, contrairement aux systèmes connus dans lesquels la liaison redondante n'est généralement utilisée qu'en cas de défaillance de la première liaison, le système de contrôle de vol peut utiliser la première liaison 3 et la deuxième liaison 4 en même temps en fonctionnement normal, c'est-à-dire en l'absence de défaillance d'une des deux liaisons, et peut mettre à profit l'utilisation concomitante de ces deux liaisons pour vérifier l'absence de corruption des données échangées entre les deux unités de traitement.

Les première et deuxième unités de traitement 1 et 2 peuvent utiliser le protocole Ethernet IEEE 802.3 ou HLDC ou SDLC ou tout autre protocole disposant d'une fonction de détection ou correction d'erreur pour communiquer entre elles par l'intermédiaire des deux liaisons 3 et 4. Une liaison Ethernet permet notamment d'assurer de hautes performances, une grande robustesse environnementale, notamment vis-à-vis de la résistance à la foudre et de la Compatibilité Electro-Magnétique (« CEM ») et une haute robustesse fonctionnelle grâce à la mise en oeuvre de mécanismes de contrôle d'intégrité de données et de contrôle de flux. De plus le protocole Ethernet est un standard industriel cohérent avec les technologies de communication avionique, tel que AFDX (« Avionics Full DupleX switched ethernet ») ou µAFDX, et de maintenance.

Les première et deuxième liaisons peuvent être des liaisons CCDL (« Cross Channel Data Link »). Une telle liaison permet de synchroniser chaque applicatif avec une précision inférieure à cent microsecondes. Une telle liaison permet également, au lieu d'échanger des discrets comme dans les systèmes connus, d'échanger des informations de santé construites par le matériel (« hardware ») ou le logiciel (« software »), des informations utiles au système (acquisition, statuts,...) et des données fonctionnelles de système d'exploitation (OS ou « Operating System ») ou de système d'application (AS ou « Application System »).

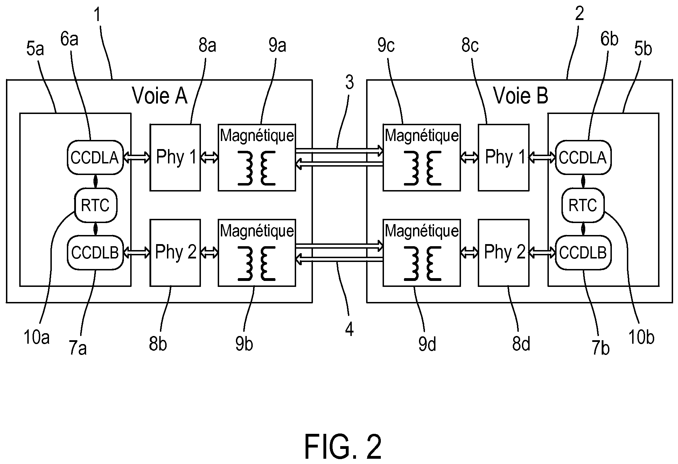

De telles liaisons CCDL entre les deux unités de traitement A et B sont représentées en **figure 2**. Chaque unité de traitement 1,2 peut comprendre un système, par exemple un système sur puce (SoC, « system on a chip ») ou un système constitué d'un microprocesseur et de périphériques implémentés dans des boitiers séparés ou dans une carte FPGA, 5a, 5b comportant un premier module CCDL (CCDLA) 6a, 6b pour établir la première liaison CCDL 3 et un deuxième module CCDL (CCDLB) 7a, 7b pour établir la deuxième liaison CCDL 4. Chaque liaison CCDL disposant de son propre module, l'indépendance de chacune des liaisons CCDL est renforcée et la probabilité de défaillance simultanée des deux liaisons CCDL est ainsi diminuée. Chaque module CCDL peut être relié à l'interface entrée/sortie de son boitier par le biais d'une interface matérielle Phy 8a, 8b, 8c, 8d et d'un transformateur 9a, 9b, 9c, 9d.

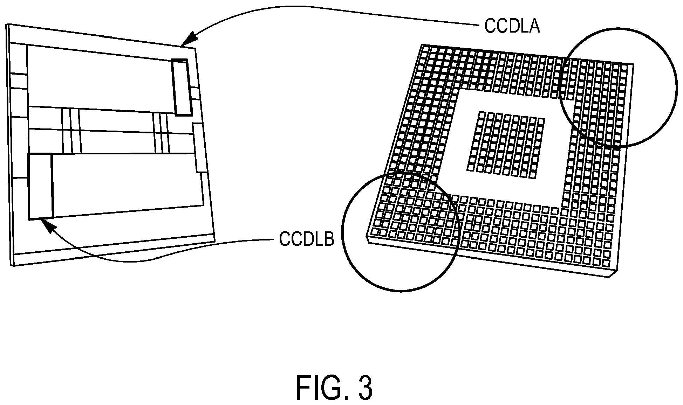

Comme illustré en **figure 3**, les modules CCDL de chaque unité de traitement peuvent être ségrégés physiquement en étant disposés sur le système 5a, 5b en des localisations distinctes et éloignées les unes des autres, par exemple en les disposant chacun à un coin du système. Alternativement, ces modules CCDL peuvent être disposés sur des puces distinctes. Ceci permet de réduire la probabilité de panne commune en cas d'altération de type SEU (« Single Event Upset ») ou MBU (« Multiple Bit Upset »).

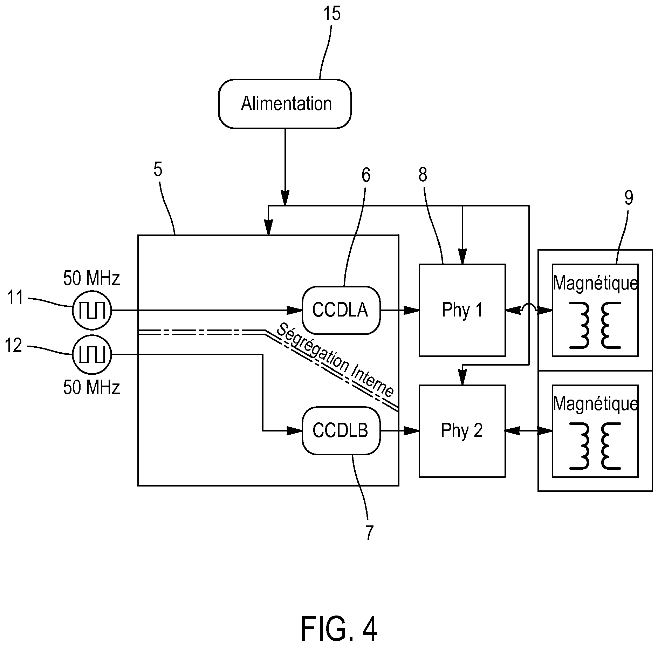

Selon une première variante chaque système 5a, 5b est alimenté par une alimentation séparée. Selon une deuxième variante, outre une alimentation 15 (« power supply ») commune à l'ensemble du système sur puce, chaque système sur puce peut être alimenté par deux signaux d'horloges distincts 11 et 12, comme représenté en **figure 4****.** Ainsi, bien qu'ils ne soient pas alimentés de manière indépendante, les modules CCDL de chaque unité de traitement peuvent être alimentés par des horloges indépendantes, ce qui renforce la résistance aux pannes du système sur puce en empêchant qu'une panne d'horloge d'un des modules CCDL puisse affecter l'autre module CCDL.

Les modules CCDL de chaque unité de traitement peuvent être synchronisés grâce à un mécanisme d'horloge temps réel local (HTR ou RTC « Real time clock ») 10a, 10b et à un mécanisme de synchronisation tel qu'un mécanisme à fenêtre de synchronisation. Ainsi en cas de perte de la synchronisation, chaque unité de traitement peut fonctionner grâce à son horloge locale puis se synchroniser à nouveau à la réception d'un signal valide. Le mécanisme d'horloge local est programmable par l'applicatif et sa programmation est protégée contre les altérations de type SEU (« Single Event Upset ») ou MBU (« Multiple Bit Upset »). Les liaisons CCDL peuvent néanmoins continuer à fonctionner même en l'absence de synchronisation ou en cas de perte d'une horloge.

Le système peut en outre comprendre des moyens de communication de sauvegarde permettant d'assurer des échanges de données entre les première et deuxième unités de traitement et utilisés uniquement en cas de défaillances des première et deuxième liaisons, pour éviter une coupure des communications entre les unités de traitement.

Dans un premier mode de réalisation illustré en **figure 1**, ces moyens de communications de sauvegarde peuvent comprendre un réseau de capteurs ou d'actionneurs 13. Un tel réseau de capteurs ou d'actionneurs peut à titre d'exemple être un réseau de capteurs ou actionneurs intelligents (« smart-sensor », « smart-actuator »). Chaque unité de traitement peut alors être connectée à ce réseau 13 par l'intermédiaire d'un bus du type RS-485 permettant de transmettre des informations non plus de manière analogique mais numérique.

Dans un second mode de réalisation illustré en **figure 1**, ces moyens de communication de sauvegarde comprennent un réseau sécurisé embarqué pour l'avionique 14. Un tel réseau sécurisé embarqué peut à titre d'exemple être un réseau Ethernet redondant tel qu'AFDX (« Avionics Full DupleX switched ethernet ») ou µAFDX. Un tel réseau fournit des moyens de partage des ressources, de ségrégation des flux ainsi que le déterminisme et la disponibilité requise pour les certifications aéronautiques.

Les signaux numériques transmis par l'intermédiaire des deux liaisons bidirectionnelles entre les unités de traitement étant plus sensibles aux perturbations que les signaux analogiques discrets transmis sur la pluralité de liaisons discrètes des systèmes existants, des mécanismes de contrôle d'intégrité et de contrôle de cohérence des données transmises entre les deux unités de traitement distantes peuvent être mis en place.

Ainsi chaque unité de traitement peut comprendre des moyens pour vérifier l'intégrité des données reçues par l'intermédiaire de chacune des liaisons bidirectionnelles. Afin de vérifier l'intégrité des données reçues, les différents champs de chaque trame reçue peuvent être vérifiés, notamment dans le cas d'une liaison Ethernet les champs relatifs à l'adresse de destination, à l'adresse source, au type et à la longueur de la trame, aux données MAC et aux données de bourrage. Une trame peut être considérée comme non valide si la longueur de cette trame n'est pas cohérente avec la longueur spécifiée dans le champ longueur de la trame ou si les octets ne sont pas entiers. Une trame peut également être considérée comme non valide si le contrôle de redondance (CRC, « Cyclic Redundancy Check ») calculé à la réception de la trame ne correspond pas au CRC reçu en raison d'erreurs dues par exemple, aux interférences lors de la transmission.

De plus, chaque unité de traitement peut comprendre des moyens pour vérifier suite à la transmission d'une donnée à la fois sur la première liaison 3 et sur la deuxième liaison 4, la cohérence des données reçues sur les deux liaisons qui doivent véhiculer les mêmes informations en l'absence de panne ou de corruption des trames transmises.

Afin de pouvoir assurer le contrôle d'un moteur de l'aéronef, le système de contrôle de vol doit confier ce contrôle à l'une de ses deux voies. Pour cela, chaque unité de traitement doit connaitre l'état de santé de l'unité de traitement opposée. Pour ce faire, les moyens de communication du système sont configurés pour transmettre, d'une première unité de traitement à une seconde unité de traitement, des données relatives à la santé de la première unité de traitement, et réciproquement.

De telles données de santé sont des données permettant la sélection d'une voie et l'établissement d'un diagnostic système complet. Elles peuvent être : des données de diagnostics CCDL, des signaux nécessaires à la logique de commutation de voies, des données de statuts du système d'exploitation ou des applicatifs, des données de diagnostics du matériel, notamment de capteurs ou d'actionneurs, des données de diagnostics fonctionnels réalisés par le logiciel,

Le système de contrôle de vol peut comprendre des moyens pour sélectionner pour le contrôle d'un moteur de l'aéronef, en fonction des données relatives à la santé de la première unité de traitement transmises et de données relatives à la santé de la seconde unité de traitement, une unité de traitement parmi la première et la seconde unités de traitement permettant d'assurer le meilleur fonctionnement du système de contrôle de vol.

## Revendications

1. Système de contrôle de vol d'un aéronef comprenant :
- une première unité de traitement (1),
- une deuxième unité de traitement (2),
- des moyens de communication configurés pour établir une première liaison numérique bidirectionnelle (3) et une deuxième liaison numérique bidirectionnelle (4) entre la première unité de traitement (1) et la deuxième unité de traitement (2),
ladite deuxième liaison (4) étant redondante avec la première liaison (3),
et lesdites première (3) et deuxième liaisons (4) étant susceptibles d'être actives de façon concomitante
ledit système comprenant en outre des moyens de communication de sauvegarde permettant d'assurer des échanges de données entre les première (1) et deuxième (2) unités de traitement en cas de défaillances des première (3) et deuxième liaisons (4),
**caractérisé en ce que**
lesdits moyens de communication de sauvegarde comprennent un réseau de capteurs ou d'actionneurs (13) et/ou un réseau sécurisé embarqué pour l'avionique (14).

2. Système de contrôle de vol selon la revendication 1, dans lequel les première (3) et deuxième (4) liaisons sont des liaisons CCDL « Cross Channel Data Link ».

3. Système de contrôle de vol selon l'une des revendications précédentes, dans lequel le réseau sécurisé embarqué (14) est un réseau Ethernet redondant du type AFDX « Avionics Full DupleX switched ethernet » ou µAFDX.

4. Système de contrôle de vol selon l'une des revendications précédentes, dans lequel chaque unité de traitement (1,2) comprend des moyens pour vérifier l'intégrité de données reçues sur chacune des liaisons (3, 4).

5. Système de contrôle de vol selon l'une des revendications précédentes, dans lequel chaque unité de traitement (1, 2) comprend des moyens pour vérifier, suite à la transmission d'une donnée à la fois sur la première liaison (3) et sur la deuxième liaison (4), la cohérence des données reçues sur la première liaison (3) et sur la deuxième liaison (4).

6. Système de contrôle de vol d'un aéronef selon l'une des revendications précédentes, dans lequel les moyens de communication sont configurés pour transmettre d'une première unité de traitement (1,2) à une seconde unité de traitement (2,1) des données relatives à la santé de la première unité de traitement (1,2), ledit système comprenant des moyens pour sélectionner une unité de traitement pour le contrôle d'un moteur dudit aéronef parmi la première (1,2) et la seconde (2,1) unités de traitement en fonction des données relatives à la santé de la première unité de traitement transmises et de données relatives à la santé de la seconde unité de traitement (2,1).

## Patentansprüche

1. Flugsteuerungssystem eines Flugzeugs, umfassend:
- eine erste Verarbeitungseinheit (1),
- eine zweite Verarbeitungseinheit (2),
- Kommunikationsmittel, die dafür konfiguriert sind, eine erste bidirektionale digitale Verbindung (3) und eine zweite bidirektionale digitale Verbindung (4) zwischen der ersten Verarbeitungseinheit (1) und der zweiten Verarbeitungseinheit (2) aufzubauen,
wobei die zweite Verbindung (4) mit der ersten Verbindung (3) redundant ist,
und die erste (3) und zweite Verbindung (4) in der Lage sind, gleichzeitig aktiviert zu werden,
wobei das System weiter Sicherheits-Kommunikationsmittel umfasst, die es ermöglichen, im Falle von Versagen der ersten (3) und zweiten Verbindung (4) Datenaustausche zwischen der ersten (1) und zweiten (2) Verarbeitungseinheit sicherzustellen,
**dadurch gekennzeichnet, dass**
die Sicherheits-Kommunikationsmittel ein Sensoren- oder Aktoren-Netzwerk (13) und/oder ein gesichertes integriertes Netzwerk für die Avionik (14) umfassen.

2. Flugsteuerungssystem nach Anspruch 1, wobei die erste (3) und zweite (4) Verbindung CCDL-, "Cross Channel Data Link", Verbindungen sind.

3. Flugsteuerungssystem nach einem der vorstehenden Ansprüche, wobei das gesicherte integrierte Netzwerk (14) ein redundantes Ethernet-Netzwerk vom Typ AFDX, "Avionics Full DupleX Switched Ethernet", oder µAFDX ist.

4. Flugsteuerungssystem nach einem der vorstehenden Ansprüche, wobei jede Verarbeitungseinheit (1, 2) Mittel umfasst, um die Integrität von über jede der Verbindungen (3, 4) empfangenen Daten zu verifizieren.

5. Flugsteuerungssystem nach einem der vorstehenden Ansprüche, wobei jede Verarbeitungseinheit (1, 2) Mittel umfasst, um in Anschluss an die gleichzeitige Übertragung von Daten über die erste Verbindung (3) und über die zweite Verbindung (4) die Kohärenz der über die erste Verbindung (3) und über die zweite Verbindung (4) empfangenen Daten zu verifizieren.

6. Flugsteuerungssystem eines Flugzeugs nach einem der vorstehenden Ansprüche, wobei die Kommunikationsmittel dafür konfiguriert sind, Daten, die sich auf den Zustand der ersten Verarbeitungseinheit (1, 2) beziehen, von einer ersten Verarbeitungseinheit (1, 2) zu einer zweiten Verarbeitungseinheit (2, 1) zu übertragen, wobei das System Mittel umfasst, um eine Verarbeitungseinheit für die Steuerung eines Motors des Flugzeugs abhängig von den übertragenen Daten, die sich auf den Zustand der ersten Verarbeitungseinheit beziehen, und von Daten, die sich auf den Zustand der zweiten Verarbeitungseinheit (2, 1) beziehen, aus der ersten (1, 2) und der zweiten (2, 1) Verarbeitungseinheit auszuwählen.

## Claims

1. A flight control system of an aircraft comprising:
- a first processing unit (1),
- a second processing unit (2),
- communication means configured for establishing a first bidirectional digital link (3) and a second bidirectional digital link (4) between the first processing unit (1) and the second processing unit (2),
said second link (4) being redundant with the first link (3),
wherein said first (3) and second (4) links may be active concomitantly,
said system further comprising backup communication means giving the possibility of ensuring exchanges of data between the first (1) and second (2) processing units in the case of failures of the first (3) and second links (4),
**characterized in that** said backup communication means comprise a network of sensors or actuators (13) and/or an on-board secure network for avionics (14).

2. The flight control system according to claim 1, wherein the first (3) and second (4) links are CCDL "Cross Channel Data Link" links.

3. The flight control system according to one of the preceding claims, wherein the on-board secure network (14) is a redundant Ethernet network of the AFDX "Avionics Full DupleX switched ethernet" or µAFDX type.

4. The flight control system according to one of the preceding claims, wherein each processing unit (1, 2) comprises means for verifying the integrity of the data received over each of the links (3, 4).

5. The flight control system according to one of the preceding claims, wherein each processing unit (1, 2) comprises means for verifying, subsequently to the transmission of a datum both over the first link (3) and over the second link (4), the consistency of the received data over the first link (3) and over the second link (4).

6. The flight control system of an aircraft according to one of the preceding claims, wherein the communication means are configured for transmitting from a first processing unit (1, 2) to a second processing unit (2, 1) data relative to the health of the first processing unit (1, 2), said system comprising means for selecting a processing unit for controlling an engine of said aircraft from among the first (1, 2) and second (2, 1) processing units according to the transmitted data relative to the health of the first processing unit and to data relative to the health of the second processing unit (2, 1).
